(19) Europäisches Patentamt
European Patent Office
Office européen des brevets

(11) EP 1 897 837 B1

(12) **EUROPEAN PATENT SPECIFICATION**

(45) Date of publication and mention of the grant of the patent:
**30.06.2010 Bulletin 2010/26**

(51) Int Cl.:
***B66C 5/02*** *(2006.01)*

(21) Application number: **07017223.4**

(22) Date of filing: **03.09.2007**

(54) **Carriage having front and rear drive wheels**

Wagen mit vorderen und hinteren Antriebsrädern

Chariot à roues motrices avant et arrière

(84) Designated Contracting States:
**CH DE LI SE**

(30) Priority: **06.09.2006 JP 2006241762**

(43) Date of publication of application:
**12.03.2008 Bulletin 2008/11**

(73) Proprietor: **Murata Machinery, Ltd.**
**Kyoto-shi,**
**Kyoto 6018326 (JP)**

(72) Inventor: **Tanaka, Hiroshi**
**Inuyama-shi,**
**Aichi 484-8502 (JP)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(56) References cited:
**EP-A- 1 090 872**
**DE-C1- 4 436 520**
**US-A- 3 059 782**
**US-A- 3 837 291**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 897 837 B1

## Description

### Technical Field

The present invention relates to a carriage of a stacker crane or other rail guided vehicles, or a carriage of an overhead traveling vehicle. In particular, the present invention relates to a carriage having drive wheels on front and rear sides of a vehicle body.

### Background Art

Patent Publication 1 (Japanese Patent Publication No. 2002-362709) discloses a stacker crane having travel motors on front and rear sides of each of upper and lower carriages, and the stacker crane travels using four motors in total. Positions of the motors depend on the size of the carriages. In the case where travel motors are provided on the front and rear sides of the drive wheels in the travel direction, the overall length of the carriage becomes large. In the case where travel motors are provided on the left and right sides of the drive wheels, the overall width of the carriage becomes large. In either of the cases, the size of the carriage becomes large disadvantageously.

EP-A-1090872 discloses a crane having four legs, wherein the front legs are supported by font drive wheels and wherein the rear legs are supported by rear drive wheels. Two front travel motors are positioned above each front drive wheel. Similarly, two rear travel motors are positioned above rear drive wheel. The motors and the drive wheels are drivingly coupled by pinions, transmission elements comprising respective sprockets and chains.

It is an objection of the present invention to provide a carriage capable of high acceleration driving without increasing the overall height or the overall width of a carriage.

Another object of the present invention is to provide a transmission mechanism.

Still another object of the present invention is to transmit the force from travel motors equally to left and right sides of drive wheels.

### Means for Solving the Problems

In the present invention, a carriage has front and rear drive wheels. A plurality of travel motors are provided above each of front and rear drive wheels. The plurality of travel motors and the drive wheels are connected by pulleys connected to respective drive shafts of the travel motors, belts, and pulleys connected to respective drive shafts of the drive wheels, without any reduction gears.

The number of the travel motors for each of the drive wheels may be four, for example. Preferably, two motors are provided for each of the drive wheels. Preferably, drive shafts of the travel motors are laid horizontally. It is particularly preferable that the drive shafts are oriented to the left side and the right side in a traveling direction, i.e., the drive shafts are oriented in a direction perpendicular to the traveling direction in a horizontal plane. Further, preferably, the drive shafts of the travel motors are oriented in opposite directions to each other.
Further, preferably, the travel motors are equally distanced from the drive wheel.

In the present invention, a method for driving a carriage having a front drive wheel and a rear drive wheel comprises the steps of:

providing a plurality of travel motors above each of the drive wheels;
connecting the plurality of travel motors and the drive wheels by pulleys connected to respective drive shafts of the travel motors, belts, and pulleys connected to respective drive shafts of the drive wheels, without any reduction gears; and
driving the drive wheels by the travel motors.

### Advantages of the Invention

In the carriage of the present invention, each of the front and rear drive wheels of the carriage are driven by the plurality of the travel motors. Therefore, high acceleration driving can be performed using short travel motors. Further, since the travel motors are positioned above each of the drive wheels, the overall length or the overall width of the carriage does not increase. Further, since the travel motors are provided in parallel with drive shaft of the drive wheel, power transmission can be performed easily. Further, by connecting the pulleys connected to the drive shafts of the travel motors and the pulleys connected to the drive shafts of the drive wheels using belts, deceleration can be carried out based on the ratio between the diameters of the pulleys. Therefore, no reduction gear is required.

Further, in the case where a plurality of travel motors are arranged such that the drive shafts of the carriages are oriented to the left and right in the traveling direction, in opposite directions to each other, since the pulleys and belts can be provided on the left and right sides in the traveling direction of the carriage, it is possible to drive the drive wheels in a compact space easily.

In the case where a plurality of travel motors are equally distanced from the drive wheel, it is possible to transmit the force equally to left and right sides of the drive wheels.

Brief Description of the Drawings

[FIG. 1]
FIG. 1 is a side view showing a stacker crane according to an embodiment.
[FIG. 2]
FIG. 2 is a partial cross sectional view in a vertical direction showing components and belt driving of a drive wheel using travel motors in the stacker crane according to the embodiment.
[FIG. 3]
FIG. 3 is a plan view showing main components and positions of the travel motors for driving the drive wheel in the stacker crane according to the embodiment.
[FIG. 4]
FIG. 4 is a front view showing main components of a mechanism of applying wheel pressures to adherence rollers in the stacker crane according to the embodiment.
[FIG. 5]
FIG. 5 is a side view showing main components of the mechanism of applying wheel pressures to a pair of front and rear adherence rollers in the stacker crane according to the embodiment.
[FIG. 6]
FIG. 6 is a block diagram showing control of four travel motors in the stacker crane according to the embodiment.
[FIG. 7]
FIG. 7 is a view illustrating wheel pressures applied to front and rear drive wheels in the stacker crane according to the embodiment.

Description of the numerals

2: stacker crane
4: carriage
6: mast
8: elevation frame
10: transfer apparatus
12: traveling rail
13: first leg
14: second leg
16, 17: pulley
18, 19: travel motor
20: belt
22: side roller
24, 25: adherence roller
26: rocking base
27, 29: pin
29: connecting member
30: spring
31: bolt
32, 33: pulley
34: drive wheel
36: drive shaft
38: motor support
40, 44: bolt
42,45: fixed member
46: plate

47: nut
50: encoder
51: position and velocity calculator
52: velocity pattern generator
54: error calculator
55: torque controller

EMBODIMENT

FIGS. 1 to 7 show an embodiment of a stacker crane 2 as an example. In the drawings, a reference numeral 4 denotes a carriage. An additional carriage may be provided in an upper part of the stacker crane 2. A reference numeral 6 denotes a mast. Though the mast has a gate shape in the illustrated embodiment, the shape of the mast 6 can be determined arbitrarily. A reference numeral 8 denotes an elevation frame. For example, a transfer apparatus 10 such as a slide fork is mounted on the elevation frame 8 along the mast 6. By the elevation frame 8, the height of the center of the gravity of the stacker crane 2 changes. A reference numeral 12 denotes a traveling rail, a reference numeral 13 denotes a first leg, and a reference numeral 14 denotes a second leg. By keeping the first leg 13 at a certain height, and allowing the second leg 14 to take a plurality of heights, it is possible to change the height of the traveling rail 12 relative to the ground level.

Reference numerals 16 and 17 denote pulleys. The pulleys 16 are provided respectively at front and rear positions of on one of the left and right sides of the carriage 4, and the pulleys 17 are provided respectively at front and rear positions on the other of the left and right sides of the carriage 4. Reference numerals 18 and 19 denote travel motors. A pair of the travel motors 18, 19 are provided on each of the front and rear sides of the carriage 4. The pulleys 16 and 17 are driven through belts 20. Reference numerals 22 denote side rollers provided at four positions, i.e., front left, front right, rear left, and rear right positions for limiting the position of the carriage 4 in the left-right direction with respect to the traveling rail 12. In the specification, the front and rear sides of the stacker crane 2 are defined along the traveling direction. The left-right direction is a direction perpendicular to the traveling direction in a horizontal plane, in which articles are transferred by a transfer apparatus 10.

Reference numerals 24, 25 denote adherence rollers. Hereinafter, the adherence rollers are also simply referred to as the "rollers". The adherence rollers 24, 25 contact the bottom surface of the traveling rail 12 to increase the wheel pressure applied to the drive wheel 34 (FIGS. 2 to 4). The rollers 24, 25 are attached to rocking bases 26 such that the rollers 24, 25 contact the bottom surface of the traveling rail 12 at substantially the same wheel pressure. Each of the rocking bases 26 is connected to a connecting member 28 using a pin 27 such that rocking movement of the rocking bases 26 is permitted. An end of the connecting member 28 is rotatably connected to the carriage 4 using a pin 29, and the other end of the connecting member 28 is connected to the carriage 4 through a bolt 31 and a spring 30 such that the rocking base 26 is biased upwardly.

As shown in FIGS. 2 and 3, the pulley 32 is provided at the drive shaft of the travel motor 18, and the pulley 33 is provided at the drive shaft of the travel motor 19. The pulley 32 and the pulley 33 are connected to the pulleys 16, 17 through the belts 20. The pulley 32 and the pulley 16 are provided at the front and rear positions of one of the left and right sides of the carriage 4, and the pulley 33 and the pulley 17 are provided at the front and rear positions of the other of the left and right sides of the carriage 4. The diameter of the pulley 32 and the diameter of the pulley 33 have the same size, and the diameter of the pulley 16 and the diameter of the pulley 17 have the same size. Based on the ratio between these diameters, the output of the motors 18, 19 are controlled for deceleration to eliminate the necessity of reduction gears. A reference numeral 34 denotes the drive wheel, and a reference numeral 36 denotes a drive shaft of the drive wheel 34. The travel motors 18, 19 are arranged above the drive wheel 34 such that the drive shaft of the travel motor 18 and the drive shaft of the travel motor 19 are oriented oppositely in the left-right directions in a horizontal plane. In the structure, the drive wheel 34 is driven by a large torque, and the overall length of the carriage 4 is reduced. For example, the number of travel motors for each drive wheel may be four. The travel motors 18, 19 are fixed to motor supports 38. The motor supports 38 are coupled to fixed members 42 fixed to the carriage 4 using bolts 40. By adjusting the height of the bolts 40, it is possible to adjust the tension force applied to the belts 20.

In the embodiment, the drive wheels 34 are provided on front and rear sides of the carriage 4. The drive wheels 34 are driven by the travel motors 18, 19 through the belts 20. Using the ratios between the diameters of the pulleys 32, 33 and between the diameters of the pulleys 16, 17, deceleration is performed to eliminate the necessity of reduction gears. On both of the front and rear sides of the carriage 4, travel units having the same structure including the travel motors 18, 19, the drive wheel 34, or the like are used.

As shown in e.g., FIG. 2, the first leg 13 and the second leg 14 are connected by a bolt 44. As describe above, in the case where the second leg 14 can take a plurality of heights, it is possible to change the height of the traveling rail 12 from the ground level. Preferably, the diameters of the adherence rollers 24, 25 should be changed, e.g., depending on the maximum acceleration, or the height of the center of gravity of the stacker crane 2, i.e., the height of the mast 6 or the weight of the transported article. As a result, it becomes necessary to change the height position of the traveling rail 12. In the case where the second leg 14 can take a plurality of heights, it is easy to change the height position of the traveling rail 12.

As shown in FIGS. 4 and 5, the bolt 31 attached to an end of the connecting member 28 passes through the fixed member 45 fixed to the carriage 4, and then, passes through a spring 30 between the connecting member 28 and a plate 46. The bolt 31 is fixed to the plate 46 using a nut 47. Thus, by adjusting the position of the nut 47, it is possible to freely adjust the upward biasing force by the spring 30, and it is possible to adjust the wheel pressure applied to each of the front and rear drive wheels 34.

FIG. 6 shows a control mechanism for the travel motors 18, 19. For example, encoders 50 are attached to front and rear travel motors 18 to monitor the rotation numbers. Position and velocity calculators 51 determine the current position and the velocity of the carriage. The error between the object position and the present position calculated by a velocity pattern generator 52 and the error between the object velocity and the present velocity calculated similarly are calculated by error calculators 54. Torque controllers 55 control travel motors 18, 19. In the control of FIG. 6, the travel motors 18 are masters, and the travel motors 19 are slaves. That is, the travel motors on one of the left and right sides are masters, and the travel motors on the other of the left and right sides are slaves. In the case where the wheel pressure between the adherence rollers and the traveling rail is increased to reduce the influence of acceleration of the stacker crane, the control is implemented by using one of the four motors 18, 19 as a master, and using the other three travel motors 18, 19 as slaves.

FIG. 7 shows a model of wheel pressures applied to front and rear drive wheels 34 of the stacker crane 2. Assuming that the mass, and acceleration of the stacker crane 2 are "m" and "a", respectively, due to the inertial force applied to the center of the gravity of the stacker crane 2, the gravity "mg" is not equally distributed to the front and rear drive wheels. Therefore, the gravity supported by the front drive wheel can be expressed by "mg(1-$\alpha$a)/2 ($\alpha$ is a proportionality coefficient)", and the gravity supported by the rear drive wheel can be expressed by "mg (1+$\alpha$a)/2". It is assumed that wheel pressure applied to the rollers of the front and rear two wheels of the carriage 4 is N3. Since the gravity applied front and rear positions of the carriage 4 changes, the wheel pressures N1, N2 applied to the drive wheels 34 are expressed as follows:

$$N1 = mg(1-\alpha a)/2 + N3 = mg/2 + N3 - \alpha amg/2$$

$$N2 = mg(1+\alpha a)/2 + N3 = mg/2 + N3 + \alpha amg/2$$

Even during high acceleration driving of the stacker crane 2, it is possible to increase the wheel pressures applied to the front and rear drive wheels 34 by the wheel pressure N3. Thus, the necessity of limiting the output torque of the travel motor for the smaller wheel pressure is reduced.

The following advantages are obtained in the embodiment.

1) Since the wheel pressures applied to the drive wheels 34 are increased, high acceleration driving becomes possible.
2) By the rocking bases 26, the pair of rollers 24, 25 equally contact the rail 12.
3) By the spring 30 and the connecting member 28, the wheel pressures of the rollers 24, 25 can be adjusted easily. Further, even if abrasion of the rollers 24, 26 or the drive wheels 34 occurs, it is possible to maintain the wheel pressures to have substantially suitable values.
4) By driving each of the front and rear drive wheels 34 using the pair of travel motors 18, 19, high acceleration driving becomes possible.
5) By providing the pair of travel motors 18, 19 above the drive wheel 34, it is possible to reduce the overall length of the stacker crane 2.
6) By arranging the drive shafts of the pair of the travel motors 18, 19 in parallel, orienting oppositely to the left and right of the stacker crane 2, the travel motors 18, 19 can be provided in a compact space.
7) Using the ratios between the diameters of the pulleys 32, 33 and between the diameters of the pulleys 16, 17 for deceleration, the necessity of reduction gears is eliminated.

Although the embodiment has been descried in connection with the case in which the carriage of the stacker crane 2 is used as an example, the type of the carriage can be determined arbitrarily. In the case of using a carriage of an overhead traveling vehicle, the drive wheels may contact the traveling rail upwardly. In this case, the adherence rollers may contact the traveling rail downwardly.

## Claims

1. A carriage (4) having at least a front drive wheel (34) and at least a rear drive wheel (34), the carriage (4) comprising:

    a plurality of front travel motors (18, 19) positioned above the front drive wheel (34);
    a plurality of rear travel motors (18, 19) positioned above the rear drive wheel (34);
    **characterized by**:

        a plurality of front drive pulleys (32, 33) connected to respective drive shafts of the front travel motors (18,19) without any reduction gear in a one to one relationship;
        a plurality of rear drive pulleys (32, 33) connected to respective drive shafts of the rear travel motors (18,19) without any reduction gear in a one to one relationship;
        a plurality of front wheel pulleys (16, 17) connected to a drive shaft (36) of the front drive wheel (34);
        a plurality of rear wheel pulleys (16, 17) connected to a drive shaft (36) of the rear drive wheel (34);
        a plurality of belts (20) connecting the front drive pulleys (32, 33) and the front wheel pulleys (16,17); and
        a plurality of belts (20) connecting the rear drive pulleys (32, 33) and the rear wheel pulleys (16,17).

2. The carriage of claim 1, the drive shafts of said front travel motors (18, 19) being perpendicular to a travelling direction of the carriage (4) in a horizontal plane and being oriented in opposite directions to each other; the drive shafts of said rear travel motors (18,19) being perpendicular to the travelling direction of the carriage (4) and being oriented in opposite directions to each other.

3. The carriage of claim 2, said plurality of front travel motors (18, 19) being equally distanced from the front drive wheel (34); said plurality of rear travel motors (18, 19) being equally distanced from the rear drive wheel.

4. A method for driving a carriage (4) having at least a front drive wheel (34) and at least a rear drive wheel (34), the method comprising the steps of:

    providing a plurality of front travel motors (18, 19) above the front drive wheel (34);
    providing a plurality of rear travel motors (18, 19) above the rear drive wheel (34);
    **characterized by** the steps of:

        connecting a plurality of front drive pulleys (32, 33) to respective drive shafts of the front travel motors (18, 19) without any reduction gear;
        connecting a plurality of rear drive pulleys (32, 33) to respective drive shafts of the rear travel motors (18, 19) without any reduction gear;
        connecting a plurality of front wheel pulleys (16, 17) to a drive shaft (36) of the front drive wheel (34);
        connecting a plurality of rear wheel pulleys (16, 17) to a drive shaft (36) of the rear drive wheel (34);
        driving the front wheel pulleys (16, 17) by the front drive pulleys (32, 33) with belts (20); and
        driving the rear wheel pulleys (16, 17) by the rear drive pulleys (32, 33) with belts (20).

## Patentansprüche

1. Ein Wagen (4) mit zumindest einem vorderen Antriebsrad (34) und zumindest einem hinteren Antriebsrad (34), wobei der Wagen (4) folgende Merkmale umfasst:

    eine Mehrzahl von vorderen Bewegungsmotoren (18, 19), die über dem vorderen Antriebsrad (34) positioniert sind;
    eine Mehrzahl von hinteren Bewegungsmotoren (18, 19), die über dem hinteren Antriebsrad (34) positioniert sind;
    **gekennzeichnet durch**:

        eine Mehrzahl von vorderen Antriebsriemenscheiben (32, 33), die mit jeweiligen Antriebswellen der vorderen Bewegungsmotoren (18, 19) verbunden sind, ohne ein Reduktionsgetriebe in einer Eins-zu-Eins-Beziehung;

eine Mehrzahl von hinteren Antriebsriemenscheiben (32, 33), die mit jeweiligen Antriebswellen der hinteren Bewegungsmotoren (18, 19) verbunden sind, ohne ein Reduktionsgetriebe in einer Eins-zu-Eins-Beziehung;
eine Mehrzahl von Vorderradriemenscheiben (16, 17), die mit einer Antriebswelle (36) des vorderen Antriebsrads (34) verbunden sind;
eine Mehrzahl von Hinterradriemenscheiben (16, 17), die mit einer Antriebswelle (36) des hinteren Antriebsrads (34) verbunden sind;
eine Mehrzahl von Riemen (20), die die vorderen Antriebsriemenscheiben (32, 33) und die Vorderradriemenscheiben (16, 17) verbinden; und
eine Mehrzahl von Riemen (20), die die hinteren Antriebsriemenscheiben (32, 33) und die Hinterradriemenscheiben (16, 17) verbinden.

**2.** Der Wagen gemäß Anspruch 1, bei dem die Antriebswellen der vorderen Bewegungsmotoren (18, 19) senkrecht sind zu einer Bewegungsrichtung des Wagens (4) in einer horizontalen Ebene und in entgegengesetzten Richtungen zueinander ausgerichtet sind; wobei die Antriebswellen der hinteren Bewegungsmotoren (18, 19) senkrecht sind zu der Bewegungsrichtung des Wagens (4) und in entgegengesetzten Richtungen zueinander ausgerichtet sind.

**3.** Der Wagen gemäß Anspruch 2, bei dem die Mehrzahl von vorderen Bewegungsmotoren (18, 19) gleichmäßig beabstandet ist von dem vorderen Antriebsrad (34); wobei die Mehrzahl von hinteren Bewegungsmotoren (18, 19) gleichmäßig beabstandet ist von dem hinteren Antriebsrad.

**4.** Ein Verfahren zum Antreiben eines Wagens (4) mit zumindest einem vorderen Antriebsrad (34) und zumindest einem hinteren Antriebsrad (38), wobei das Verfahren folgende Schritte umfasst:

Bereitstellen einer Mehrzahl von vorderen Bewegungsmotoren (18, 19) über dem vorderen Antriebsrad (34);
Bereitstellen einer Mehrzahl von hinteren Bewegungsmotoren (18, 19) über dem hinteren Antriebsrad (34);
**gekennzeichnet durch** folgende Schritte:

Verbinden einer Mehrzahl von vorderen Antriebsriemenscheiben (32, 33) mit jeweiligen Antriebswellen der vorderen Bewegungsmotoren (18, 19) ohne ein Reduktionsgetriebe;
Verbinden einer Mehrzahl von hinteren Antriebsriemenscheiben (32, 33) mit jeweiligen Antriebswellen der hinteren Bewegungsmotoren (18, 19) ohne ein Reduktionsgetriebe;
Verbinden einer Mehrzahl von Vorderradriemenscheiben (16, 17) mit einer Antriebswelle (36) des vorderen Antriebsrads (34);
Verbinden einer Mehrzahl von Hinterradriemenscheiben (16, 17) mit einer Antriebswelle (36) des hinteren Antriebsrads (34);
Antreiben der Vorderradriemenscheiben (16, 17) **durch** die vorderen Antriebsriemenscheiben (32, 33) mit Riemen (20); und
Antreiben der Hinterradriemenscheiben (16, 17) **durch** die hinteren Antriebsriemenscheiben (32, 33) mit Riemen (20).

## Revendications

**1.** Chariot (4) présentant au moins une roue motrice avant (34) et au moins une roue motrice arrière (34), le chariot (4) comprenant:

une pluralité de moteurs de déplacement avant (18, 19) positionnés au-dessus de la roue motrice avant (34);
une pluralité de moteurs de déplacement arrière (18, 19) positionnés au-dessus de la roue motrice arrière (34);
**caractérisé par**:

une pluralité de poulies d'entraînement avant (32, 33) connectées à des arbres d'entraînement respectifs des moteurs de déplacement avant (18, 19) sans aucun réducteur selon un rapport de un à un;
une pluralité de poulies d'entraînement arrière (32, 33) connectées à des arbres d'entraînement respectifs des moteurs de déplacement arrière (18, 19) sans aucun réducteur selon un rapport de un à un;
une pluralité de poulies de roue avant (16, 17) connectées à un arbre d'entraînement (36) de la roue motrice avant (34);
une pluralité de poulies de roue arrière (16, 17) connectées à un arbre d'entraînement (36) de la roue motrice arrière (34);
une pluralité de courroies (20) reliant les poulies d'entraînement avant (32, 33) et les poulies de roue avant (16, 17); et
une pluralité de courroies (20) reliant les poulies d'entraînement arrière (32, 33) et les poulies de roue arrière (16, 17).

**2.** Chariot selon la revendication 1, les arbres d'entraînement desdits moteurs de déplacement avant (18, 19) étant perpendiculaires à une direction de déplacement du chariot (4) dans un plan horizontal et étant orientés dans des directions opposées entre elles; les arbres d'entraînement desdits moteurs de déplacement arrière (18, 19) étant perpendiculaires à la direction de déplacement du chariot (4) et étant orientés dans des directions opposées entre elles.

**3.** Chariot selon la revendication 2, ladite pluralité de moteurs de déplacement avant (18, 19) étant équidistants de la roue motrice avant (34); ladite pluralité de moteurs de déplacement arrière (18, 19) étant équidistants de la roue motrice arrière.

**4.** Procédé pour faire rouler un chariot (4) présentant au moins une roue motrice avant (34) et au moins une roue motrice arrière (34), le procédé comprenant les étapes consistant à:

prévoir une pluralité de moteurs de déplacement avant (18, 19) au-dessus de la roue motrice avant (34);
prévoir une pluralité de moteurs de déplacement arrière (18, 19) au-dessus de la roue motrice arrière (34);
**caractérisé par** les étapes consistant à:

connecter une pluralité de poulies d'entraînement avant (32, 33) aux arbres d'entraînement respectifs des moteurs de déplacement avant (18, 19) sans aucun réducteur;
connecter une pluralité de poulies d'entraînement arrière (32, 33) aux arbres d'entraînement respectifs des moteurs de déplacement arrière (18, 19) sans aucun réducteur;
connecter une pluralité de poulies de roue avant (16, 17) à un arbre d'entraînement (36) de la roue motrice avant (34);
connecter une pluralité de poulies de roue arrière (16, 17) à un arbre d'entraînement (36) de la roue motrice arrière (34);
entraîner les poulies de roue avant (16, 17) par les poulies d'entraînement avant (32, 33) avec des courroies (20); et
entraîner les poulies de roue arrière (16, 17) par les poulies d'entraînement avant arrière (32, 33) avec des courroies (20).

F I G. 1

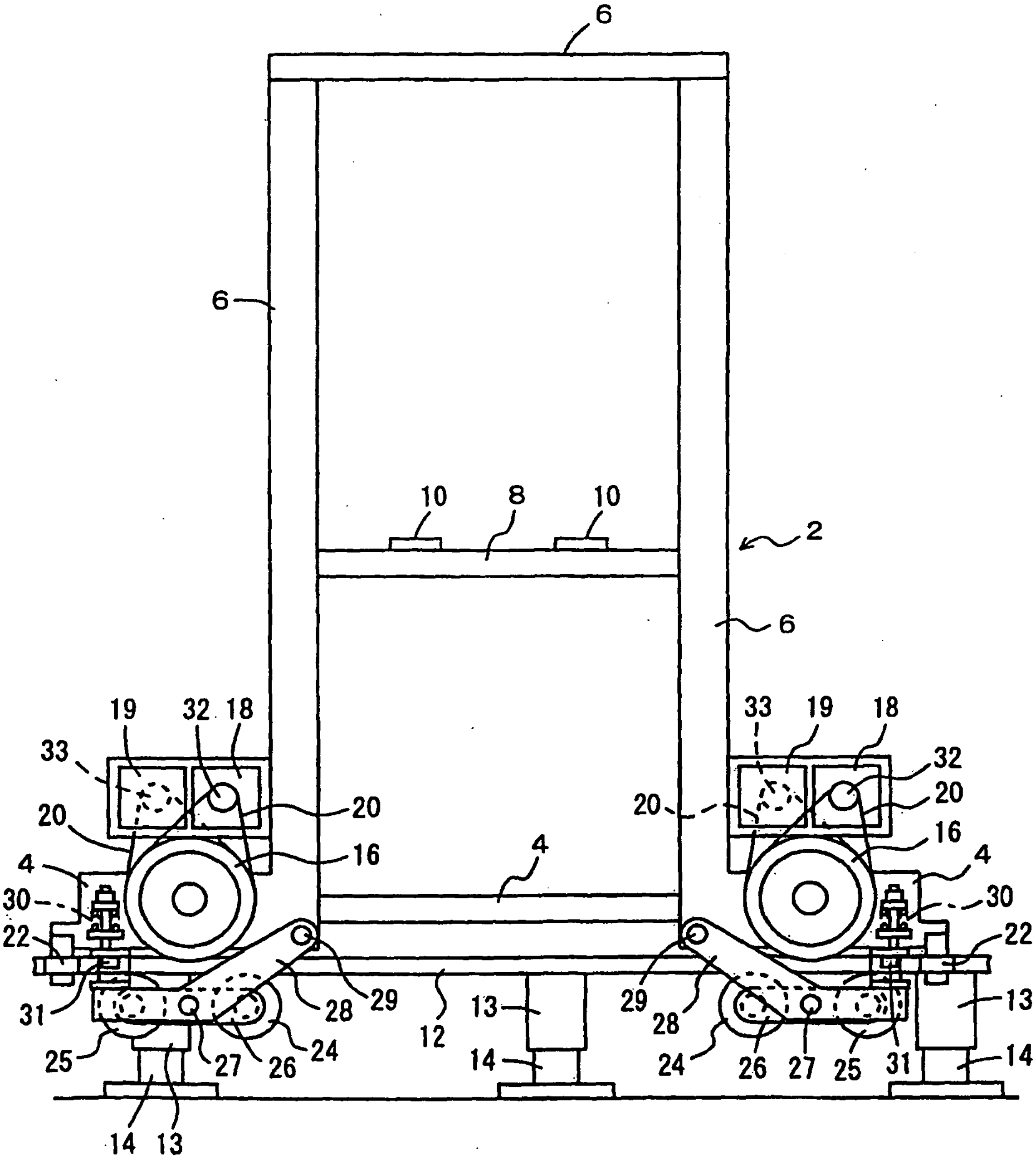
6
6
6
2
10
8
10
19
32
18
33
20
20
16
4
4
30
22
31
25
27
26
24
28
29
12
13
14
14
13
33
19
18
32
20
20
16
4
30
22
29
28
24
26
27
25
31
13
14

FIG. 2

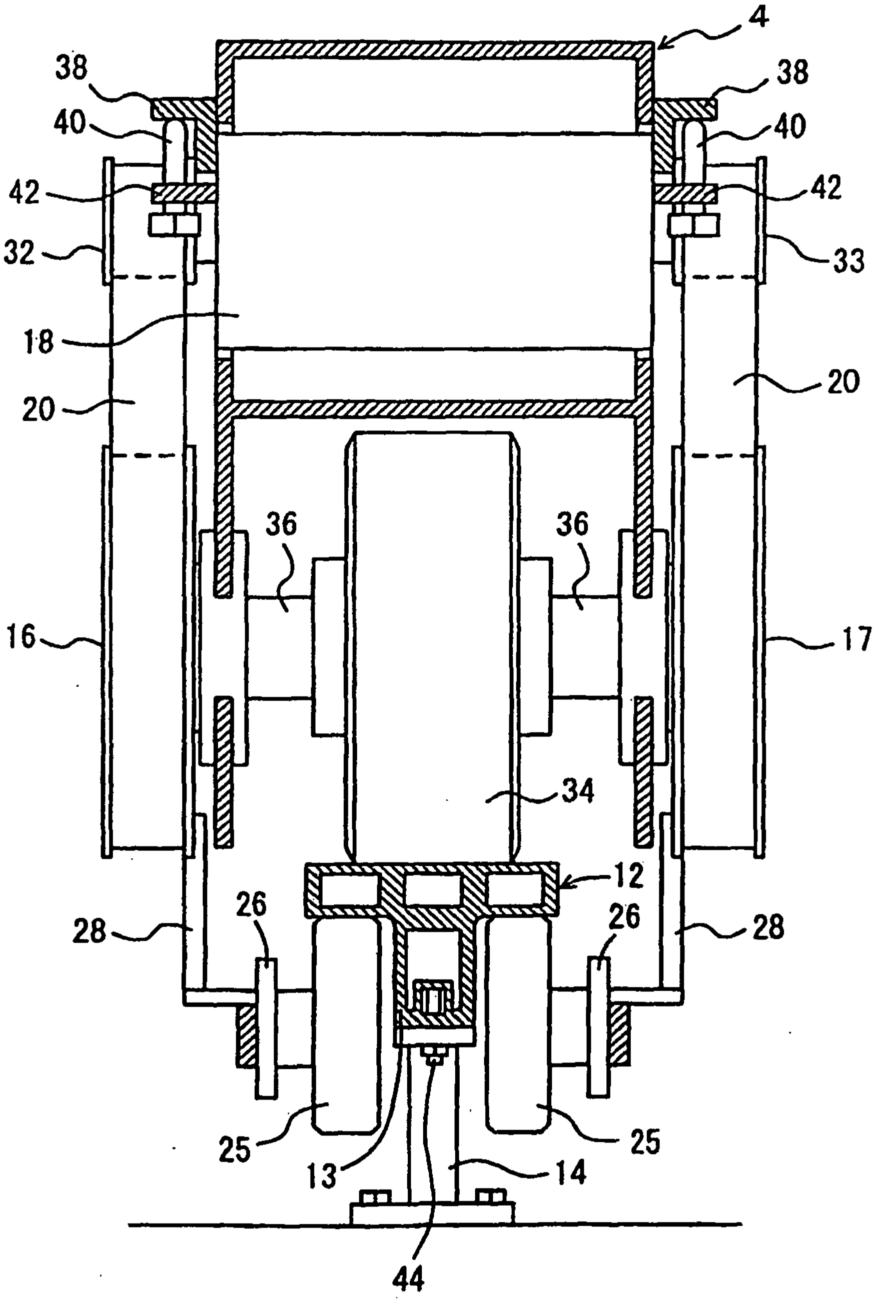
4
38
38
40
40
42
42
32
33
18
20
20
36
36
16
17
34
12
28
26
26
28
25
25
13
14
44

F I G. 3

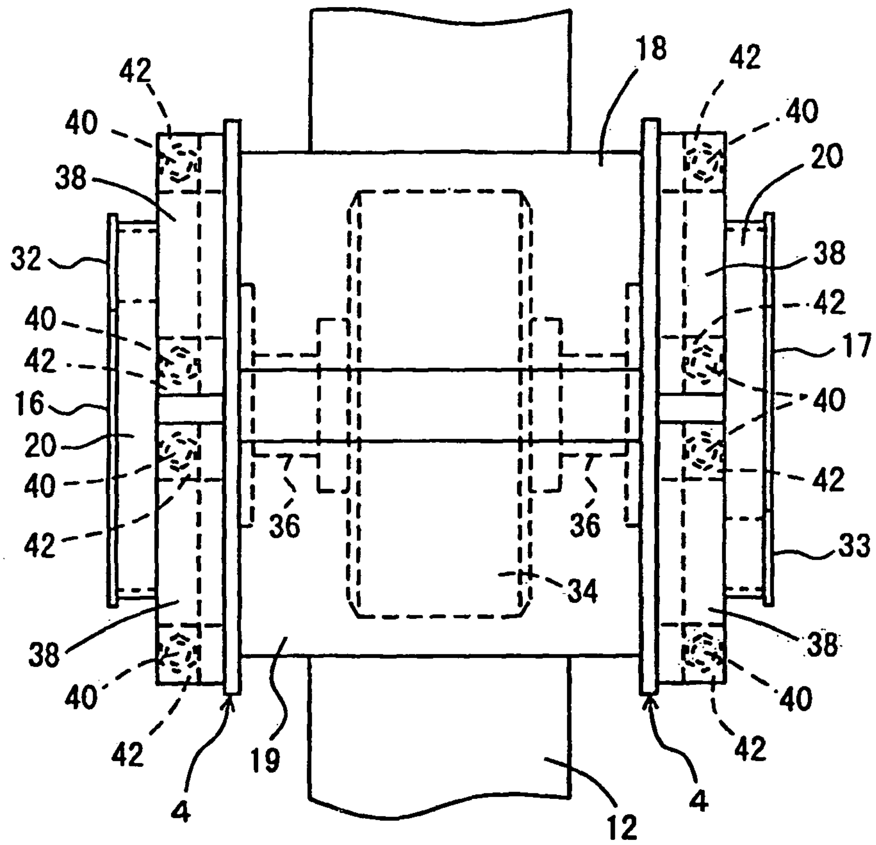

F I G. 4

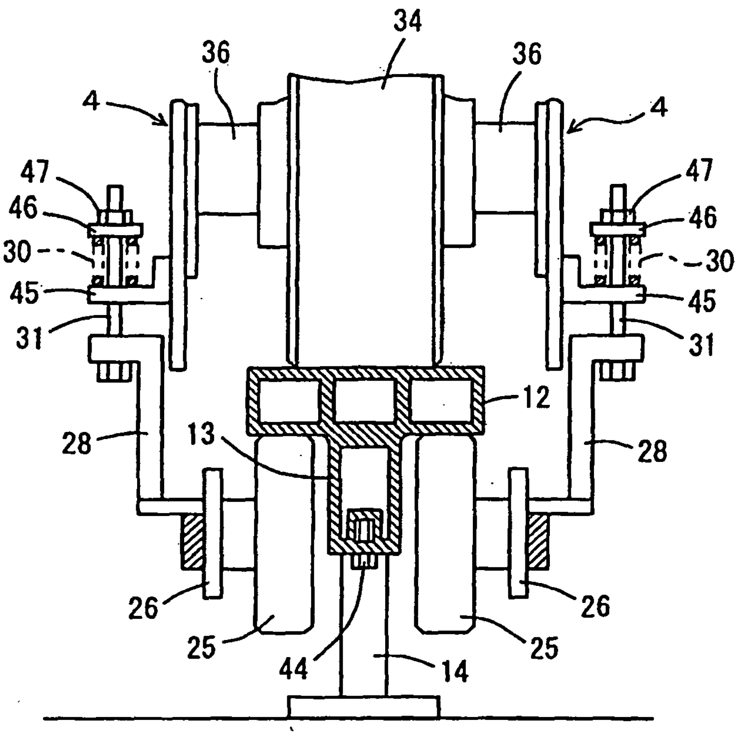
34
36
36
4
4
47
46
30
45
31
47
46
30
45
31
12
13
28
28
26
26
25
25
44
14

F I G. 5

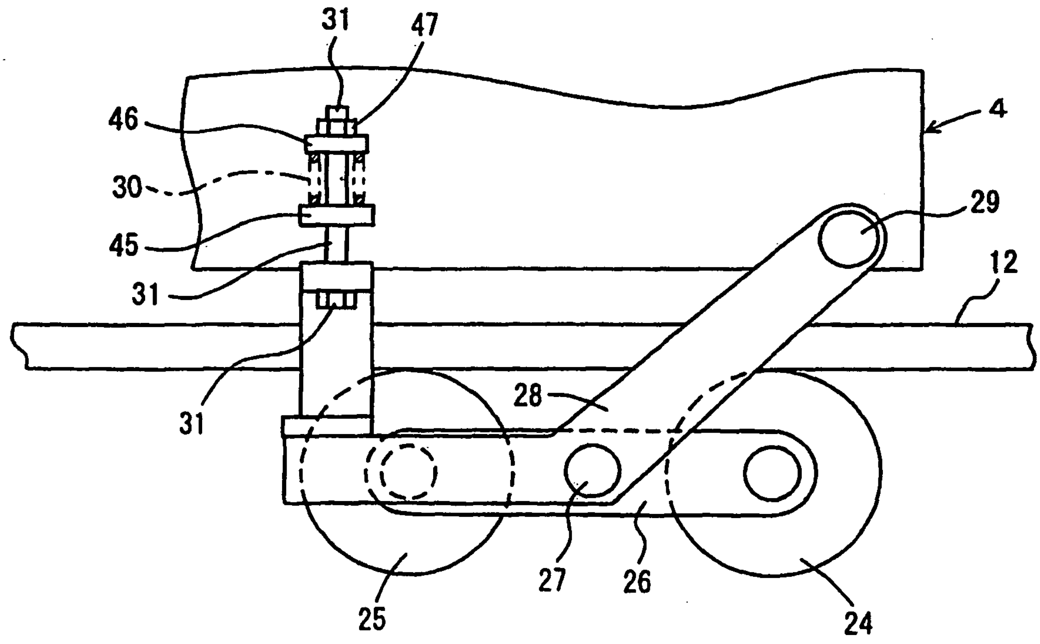
31
47
46
30
45
31
31
4
29
12
28
27
26
25
24

F I G. 6

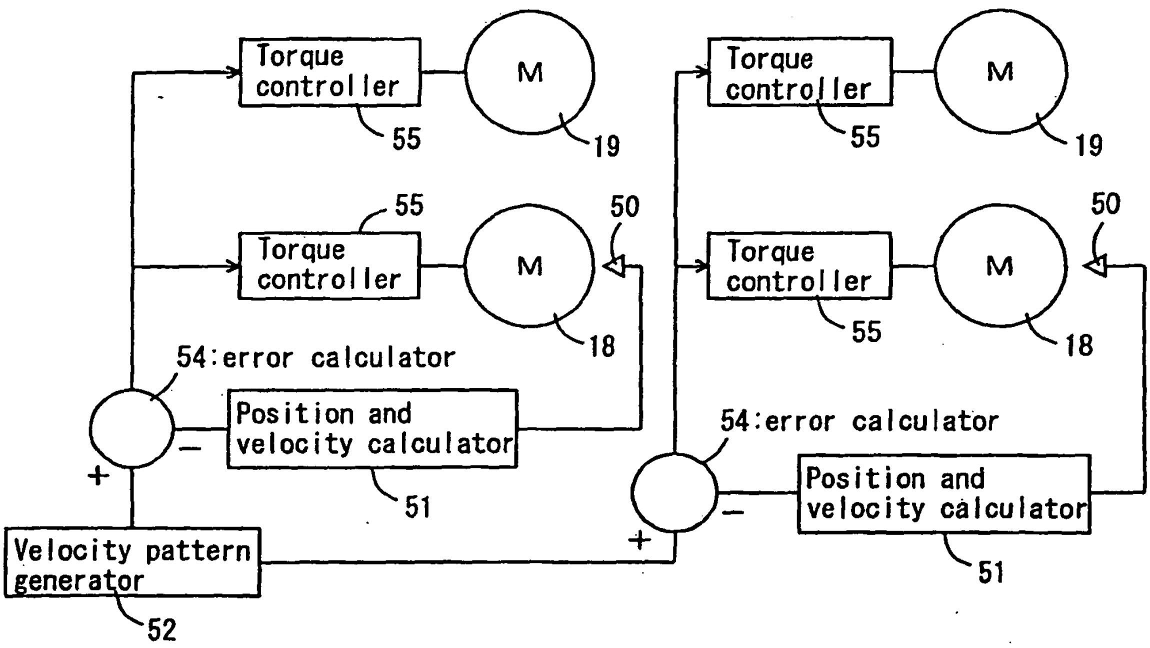
Torque controller
M
55
19
55
Torque controller
M
50
18
54:error calculator
Position and velocity calculator
51
+
−
Velocity pattern generator
52
Torque controller
M
55
19
Torque controller
M
50
55
18
54:error calculator
Position and velocity calculator
51
+
−

FIG. 7

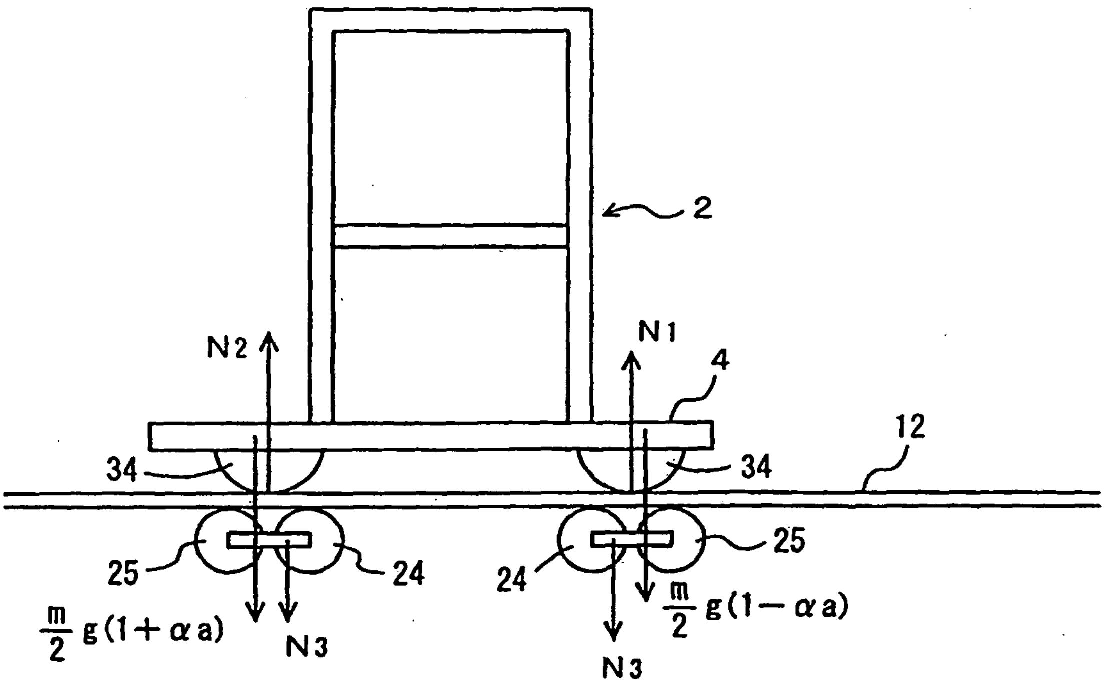

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002362709 A
- EP 1090872 A